# EUROPEAN PATENT SPECIFICATION

(11) **EP 0 721 096 B1**
(45) Date of publication and mention of the grant of the patent: **05.04.2000**
(21) Application number: 94927078.9
(22) Date of filing: 21.09.1994
(51) Int. Cl.: G01B 5/04, G01B 21/06, B65H 54/00

(54) **APPARATUS FOR MEASURING PAID-OUT LENGTH OF CABLE**
APPARAT ZUM MESSEN DER ABGEZOGENEN LÄNGE EINES KABELS
APPAREIL POUR MESURER LA LONGUEUR DEROULEE D'UN CABLE

(30) Priority: 21.09.1993 JP 5234793
(43) Date of publication of application: 10.07.1996
(73) Proprietor: KANSEI KOGYO CO., LTD., Tokyo 158 (JP)
(72) Inventor: HASEGAWA, Kiyoshi 2-32, Daida 4-chome, Tokyo 158 (JP)
(74) Representative: Bubb, Antony John Allen
(86) International application number: JP9401552
(87) International publication number: WO9508750

(56) References cited:
- JP-A- 59 163 260
- JP-A- 63 115 003
- JP-U- 4 105 190
- JP-U- 56 037 004
- JP-Y- 63 004 962
- US-A- 4 084 623
- US-A- 4 650 405
- US-A- 4 899 699
- PATENT ABSTRACTS OF JAPAN vol. 018, no. 579 (M-1698), 7 November 1994 & JP 06 212931 A (SANSHIN IND CO LTD), 2 August 1994,

## Description

### Technical Field

This invention relates to a cable delivery length measuring apparatus, and more particularly an apparatus for measuring a length of a cable drawn out or delivered during movement of a traveling unit such as a pipe inspection crawler or the like to which the cable is connected in an underground conduit or pipe such as a sewer pipe or the like.

### Background Art

In order to inspect damage to a sewer pipe or the like, an inspection procedure has been conventionally carried out wherein a crawler type inspection equipment (traveling unit) equipped with a TV camera or the like is moved in the sewer pipe, resulting in any damage to the sewer pipe or the like being identified or observed through a monitor set on the ground. For such an inspection procedure, a cable in which a drive wire, a lighting wire, a signal wire and the like are integrally incorporated and which is connected to the crawler type inspection equipment is used wherein a length of the cable delivered from a cable drum (or a delivery length of the cable after being drawn out or rewound) is measured to specify or identify a position of the damage or the like. More particularly, the cable delivery length is derived by linearly guiding the cable between a detection roller and a press roller while contacting the cable with the detection roller, to detect the number of revolutions of the detection roller by means of a measuring instrument (typically, a rotary encoder).

The cable is drawn into a sewer pipe, so that a surface of the cable is substantially soiled with oil, water, sludge or the like collected in the sewer pipe. Such oil, water, sludge or the like adhering to the cable causes slippage between the cable and the detection roller during delivery and rewind of the cable. In particular, in a conventional measuring equipment wherein a simple circular roller is used as the detection roller, the slippage renders measurement of a cable delivery length incorrect, to thereby often fail to accurately identify a position of the damage or the like.

In view of the foregoing, it is considered to employ a structure constructed so as to prevent slippage between a detection roller and a cable due to oil, water, sludge or the like adhering to a surface of the cable and consequently it is an object of the present invention to provide a cable delivery length measuring apparatus which is capable of removing, from a cable having oil, water, sludge or the like adhering thereto, the oil, water, sludge or the like at a position on the delivery side of a detection roller (or on that side which, in use, faces an underground pipe).

This object is achieved by an apparatus according to Claim 1.

Compressed air thus flowing via the through-hole functions to automatically clean the surface of the cable and fully dry it. Such a function of the compressed air is more effectively exhibited, when it is spirally flowed via the through-hole, to thereby be distributed in the form of a spiral air stream over a whole peripheral surface of the cable. In order to permit compressed air to flow in a spiral manner via the through-hole, the through-hole may be formed on a surface thereof with a spiral groove. When feeding of the compressed air is carried out at an intermediate portion of the through-hole, a linear air stream is generated rearward of the spiral air stream. A rotary brush assembly may be arranged on a portion of the scavenger body on the side of the underground pipe for rubbing the surface of the cable. The rotary brush assembly should be constructed of three rotary brushes for rubbing the surface of the cable which are arranged in a triangular manner so as to surround the cable. Such arrangement of the rotary brush assembly permits major stains on the cable to be substantially removed therefrom and facilitates removal of persistent stains from the cable.

It is considered that in order to prevent slippage between the detection roller and the cable, the detection roller is covered on a surface thereon with rubber of a high friction coefficient, resulting in being provided thereon with an anti-slip layer. This permits increased frictional force to be generated between the anti-slip layer of the detection roller and the cable, to thereby substantially prevent slippage between the detection roller and the cable due to oil, water, sludge or the like possibly residually adhering to a surface of the cable. Formation of the anti-slip layer into a gear-like configuration (typically, a configuration like a spur gear formed with tooth spaces or grooves in a pectinate manner) permits the anti-slip layer to not only exhibit further increased frictional force but be readily substantially deformed due to contact with the cable. This, even when the cable is reduced in thickness or diameter due to application of increased tension thereto, results in the anti-slip layer being instantaneously readily accommodated to such a variation in thickness or diameter of the cable, to thereby constantly ensure satisfactory close contact between the detection roller and the cable. Also, such construction of the anti-slip layer permits sludge or the like adhering to the cable to be forced to both lateral sides of the cable through the tooth spaces or grooves when it is contacted with the anti-slip layer, so that sludge or the like may be effectively removed from the surface of the cable without being deposited on the surface of the anti-slip layer of the detection roller (or the surface of the anti-slip layer contacted with the cable). In order to permit the cable delivery length measuring apparatus to exhibit more positively exhibit anti-slip characteristics, guide rollers or the like are preferably arranged so that the anti-slip layer may be contacted with the cable while keeping a central angle within a range of 120 degrees or more.

### Brief Description of Drawings

Fig. 1 is a side elevation view showing a detection roller incorporated in a cable delivery length measuring apparatus according to the present invention;
Fig. 2 is a rear elevation view showing a detection roller incorporated in a cable delivery length measuring apparatus according to the present invention;
Fig. 3 shows a detection roller incorporated in a cable delivery length measuring apparatus according to the present invention, wherein Fig. 3(A) is a front elevation view of the detection roller and Fig. 3(B) is a sectional view of the detection roller;
Fig. 4 is a schematic view showing a manner of operation of a cable delivery length measuring apparatus according to the present invention;
Fig. 5 is a fragmentary schematic view in section showing another manner of passing a cable around a detection roller;
Fig. 6 is a schematic view showing arrangement of a scavenger incorporated in a cable delivery length measuring apparatus according to the present invention;
Fig. 7 is a sectional view showing a scavenger body of a scavenger incorporated in a cable delivery length measuring apparatus according to the present invention;
Fig. 8 is a side elevation view showing a scavenger body of a scavenger incorporated in a cable delivery length measuring apparatus according to the present invention; and
Fig. 9 is a side elevation view showing a rotary brush assembly incorporated in a cable delivery length measuring apparatus according to the present invention.

### Best Mode for Carrying Out Invention

Now, the present invention will be described more detailedly with reference to the accompanying drawings.

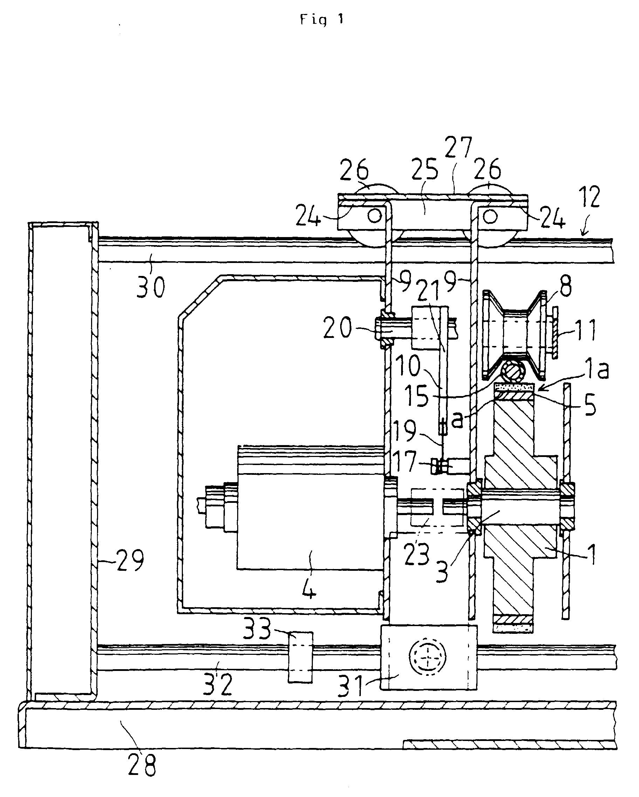

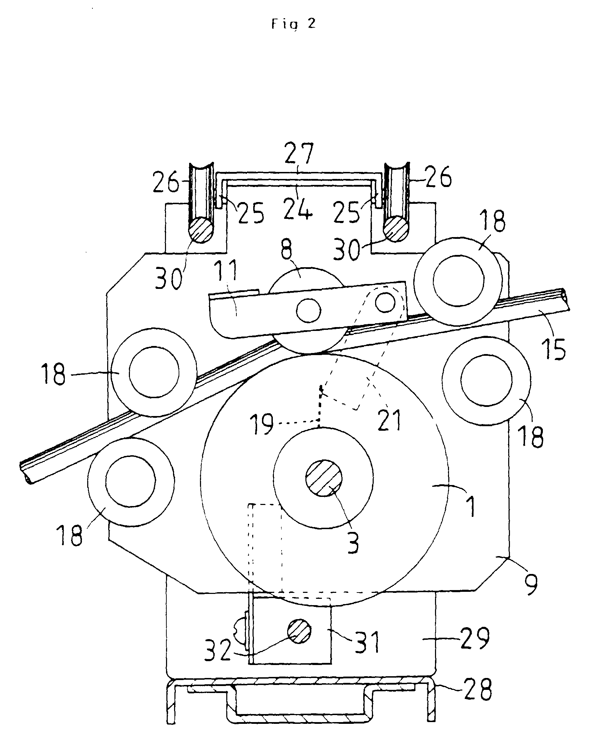

Fig. 1 is a side elevation view showing a detection roller of a cable delivery length measuring apparatus according to the present invention and Fig. 2 is a rear elevation view showing a detection roller of a cable delivery length measuring apparatus according to the present invention.

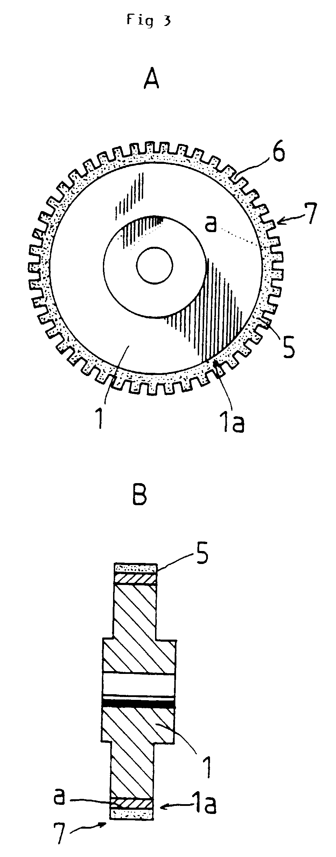

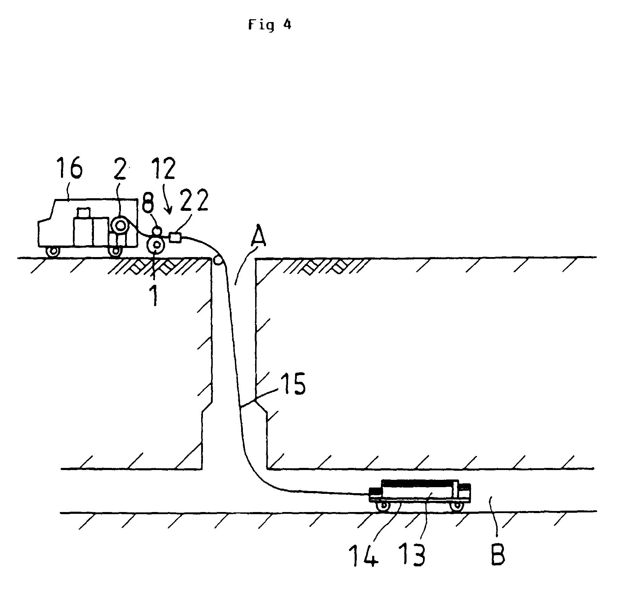

A detection roller 1 is arranged in association with a cable drum 2 (see Fig. 4) and mounted on a support shaft 3, which is connected at one end thereof to a rotary encoder 4. The detection roller 1 has a roller surface 1a adapted to be contacted with a cable 15. The roller surface 1a is provided thereon with an anti-slip layer 5, which is formed of rubber (a) of an increased friction coefficient into a predetermined thickness. Also, the anti-slip layer 5, as detailedly shown in Figs. 3(A) and 3(B), is formed into a gear-like configuration as indicated at reference numeral 7, resulting in being provided on a surface thereof with tooth spaces or grooves 6. Above the detection roller 1 is arranged a channel-type press roller 8 in a manner to be spaced from the detection roller 1 at a predetermined interval and opposite thereto. The press roller 8 is supported on a support plate 11 downwardly forced by means of a spring member 10 mounted on one of support base plates 9. The spring member 10 includes a spring 19 fixed at one end thereof on a fixing pin 17 mounted on the support base plate 9 arranged on a right-hand side in Fig. 1 and a rotary member 21 having one side fixed on a revolving shaft 20 and the other side urged in a rearward direction in Fig. 1 by means of the spring 19. The revolving shaft 20 is fixed at one end thereof on the support plate 11 and rotatably mounted at the other end thereof on the support base plate 9 arranged on a left-hand side in Fig. 1 (which support base plate is mounted thereon with the rotary encoder 4). The above-described components and members cooperate with a scavenger 22 shown in Fig. 4 to constitute a cable delivery length measuring apparatus 12 of the present invention.

In Fig. 1, reference numeral 23 designates a connection means arranged between the support shaft 3 and the rotary encoder 4.

Now, the manner of operation of the cable delivery length measuring apparatus of the present invention thus constructed will be described hereinafter. When the cable delivery length measuring apparatus is to be used for inspection of an interior of a sewer pipe B as shown in Fig. 4, a crawler type inspection equipment 14 constructed in a manner known in the art and mounted thereon with a TV camera 13 is introduced through a manhole A into the sewer pipe B, resulting in traveling therein. In this instance, the cable 15 has an electric wire for a power supply for driving and the like incorporated therein and is connected to the crawler type inspection equipment 14. The cable 15 is adapted to be wound up on the cable drum 2 through the manhole A arranged on a working vehicle 16 set on the ground in proximity to the manhole A. The cable delivery length measuring apparatus 12 is arranged at a proximal end of the cable drum 2 in a manner to be associated with the cable drum 2. The cable 15 thus connected to a rear portion of the crawler type inspection equipment 14 is suitably delivered from or rewound on the cable drum 2 by revolution of the drum 2 in association with forward or backward movement of the crawler type inspection equipment 14 in the sewer pipe B. In this instance, delivery or rewind of the cable 15 is carried out through the detection roller 1 of the cable delivery length measuring apparatus 12. The cable delivery length measuring apparatus 12, as described above, is so constructed that the cable 15 is permitted to pass between the anti-slip layer 5 provided on the roller surface 1a of the detection roller 1 and the press roller 8 arranged opposite thereto while being kept friction-contacted with the anti-slip layer 5 of the roller 1. Such construction permits the detection roller 1 to be effectively rotated while being kept from slipping with respect to the cable 15 during traveling of the cable 15. Such rotation of the detection roller 1 leads to rotation of the rotary encoder 4 constructed in a conventionally known in the art and arranged integrally with the detection roller 1, resulting in a length of the cable 15 delivered being calculated. The rubber-made anti-slip layer 5 of the detection roller 1, as shown in Figs. 3(A) and 3(B), is constructed into a structure like a spur gear which is provided on a surface thereof with a plurality of pectinate tooth spaces or grooves 6 of a predetermined depth in a circumferential direction thereof. Such construction of the anti-slip layer 5, even when stains such as oil, water, sludge or the like are kept adhering to the cable during rewind of the cable 15, permits the stains to be taken in the pectinate tooth spaces 6 and then outwardly laterally forced from the tooth spaces 6, so that the surface of the cable 15 and the roller surface 1a each are constantly kept free of the stains, to thereby ensure that a delivery length of the cable is satisfactorily measured with high accuracy.

The cable 15 is wound up on the cable drum 2 while being displaced in an axial direction of the cable drum 2. For this purpose, it is required that the detection roller 1 and press roller 8 are constructed so as to be movable in an axial direction thereof. To this end, in the illustrated embodiment, the support base plates 9 are bent at an upper end thereof in directions opposite to or apart from each other to provide bent portions 24, on which a transfer member 27 mounted on both sides 25 thereof with rollers 26 is securely fixed. The rollers 26 are movably supported on two rails 30, so that the support base plates 9 and therefore the detection roller 1 and press roller 8 may be reciprocated. The rails 30 are fixedly supported on a plate 29 mounted on a base 28 so as to horizontally extend from the plate 29. The support base plates 9 are mounted on a lower portion thereof with a slide member 31, which is slidably fitted on a rail 32 mounted on the plate 29 so as to extend therefrom in parallel to the rails 30, so that the support base plates 9 are stably supported on the base 28.

In Fig. 1, reference numeral 33 designates a stopper for the slide member 31.

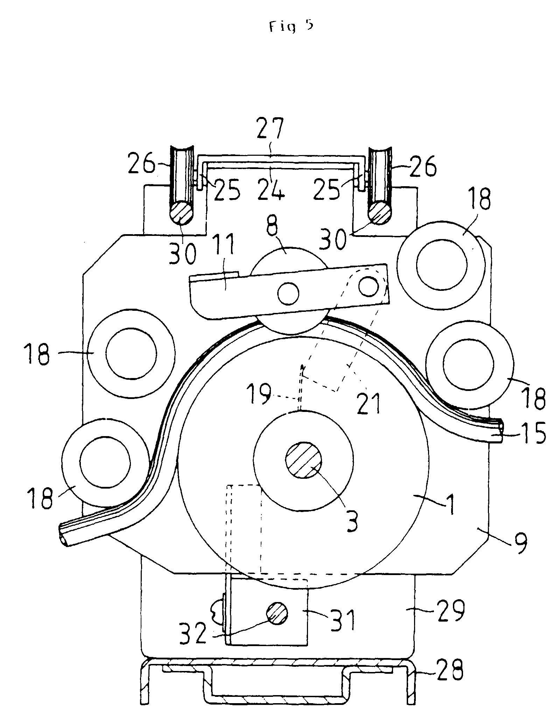

Fig. 5 is a schematic view showing another manner of passing the cable 15 around the detection roller 1.

In addition to the press roller 8 arranged right above the detection roller 1, two pairs of guide rollers 18 are supported on the support base plate 9 on the right-hand side in Fig. 1 in a manner to be positioned on both sides of the press roller 8. The guide rollers 18 in each pair are arranged in a manner to be vertically spaced from each other and laterally spaced from the press roller 8 and detection roller 1. The cable 15 is arranged so as to pass between each pair of guide rollers 18 and the detection roller 1 as well as between the detection roller 1 and the press roller 8 while being kept contacted with lower one of the guide rollers 18 in each pair. In arrangement of the cable 15 shown in Fig. 2, the cable 15 is arranged so as to extend between the guide rollers 18 in each pair and between upper one of each pair of guide rollers 18 and the detection roller 1 as well as between the detection roller 1 and the press roller 8. Such arrangement causes a contact area between the cable 15 and the roller surface 1a of the detection roller 1 to be substantially reduced. On the contrary, in arrangement of the cable 15 shown in Fig. 5, the cable 15 is arranged so as to be contacted with the lower one of the guide rollers 18 in each pair, so that a crossing angle of circumference of the detection roller 1 at which contact between the detection roller 1 and the cable 15 is carried out or a central angle at which the detection roller 1 is contacted with the cable 15 is substantially increased. For example, when the lower one of the guide rollers 18 in each pair is arranged so as to set a central angle of the detection roller 1 or anti-slip layer 5 contacted with the cable 15 within a range of 120 degrees or more, a contact surface between the cable 15 and the detection roller 1 is increased to a degree sufficient to ensure satisfactory close contact therebetween and substantially increase frictional force therebetween, resulting in effectively preventing slippage of the cable with respect to the detection roller 1, so that the measurement may be accomplished with increased accuracy. In the illustrated embodiment, the cable 15 may be arranged so as to be contacted with upper one of the guide rollers 18 in one pair and lower one of the guide rollers 18 in the other pair as required. For example, the cable 15 may be arranged so as to be contacted with both upper one of the guide rollers 18 in the pair on a right-hand side in Fig. 5 and lower one of the guide rollers 18 in the pair on a left-hand side.

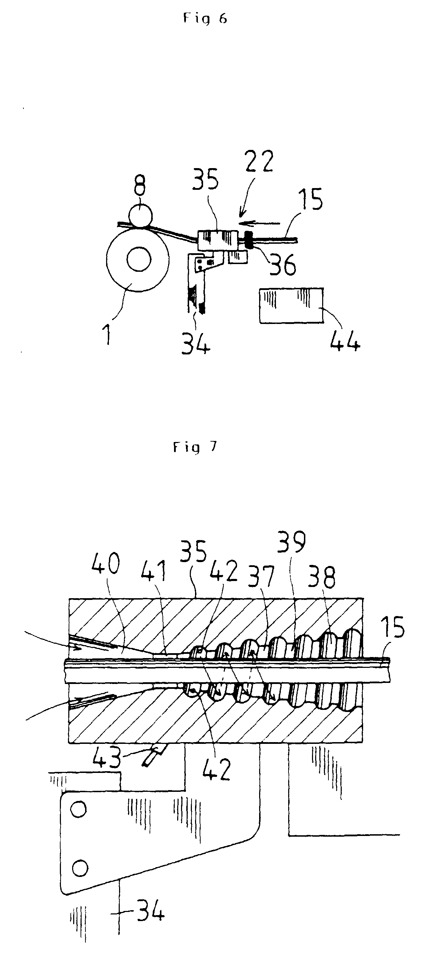

Referring now to Fig. 6, arrangement of the scavenger 22 is illustrated.

The scavenger 22 is arranged forward of the detection roller 1 (or on a side of the sewer pipe B) while being mounted on a support 34. The scavenger 22 includes a scavenger body 35 through which the cable 15 is inserted and a rotary brush assembly 36 arranged forward of the scavenger body 35 (or on the side of the sewer pipe B). Thus, the cable 15 stained in the manhole A or sewer pope B is cleaned when it travels through the scavenger 22 toward the cable drum 2 (as indicated by an arrow).

The scavenger body 35 may be constructed as shown in Fig. 7.

The scavenger body 35 is formed with a through-hole 37 via which the cable is inserted. The through-hole 37 includes a compressed air passage portion 39 formed so as to be gradually increased in diameter toward the rotary brush assembly 36 (see Fig. 6) and provided on an inner surface thereof with a spiral groove 38, an air atmosphere suction passage portion 40 formed so as to be gradually increased in diameter toward the detection roller 1 (see Fig. 6), and an equal diameter portion 41 arranged between the compressed air passage portion 39 and the air atmosphere suction passage portion 40. The spiral groove 38 is formed with an opening (see reference numeral 42) which permits the spiral groove 38 to communicate therethrough with at least one air feed path 43, so that compressed air may be fed through the air feed path 43 and spiral groove 38 to the compressed air passage portion 39 by means of a compressor 44 (see Fig. 6). Such feed of compressed air permits the compressed air to be guided through the compressed air passage portion 39 while spirally flowing along the spiral groove 38 as indicated at arrows in Fig. 7, so that it may effectively clean a whole peripheral surface of the cable 15. Thus, oil, water, sludge or the like adhering to the cable 15 is blown off toward the sewer pipe B (or on a side opposite to the detection roller 1, see Fig. 4). The compressed air passage portion 39 is increased in diameter or enlarged in a direction of flow of compressed air, resulting in a flow velocity of the air flowing out of the scavenger body 35 being reduced.

Feed of compressed air through the air feed path 43 into the scavenger body 35 causes a compressed air stream of a high velocity to be generated in the scavenger body 35, resulting in a negative pressure being formed in the air atmosphere suction passage portion 40, so that ambient air is sucked into the air atmosphere suction passage portion 40 as indicated at arrows in Fig. 7 and then caused to linearly flow therein. The air atmosphere suction passage portion 40 is formed in a manner to be increased in diameter or enlarged toward the detection roller 1, so that a large amount of air may be sucked into the air atmosphere suction passage portion 40.

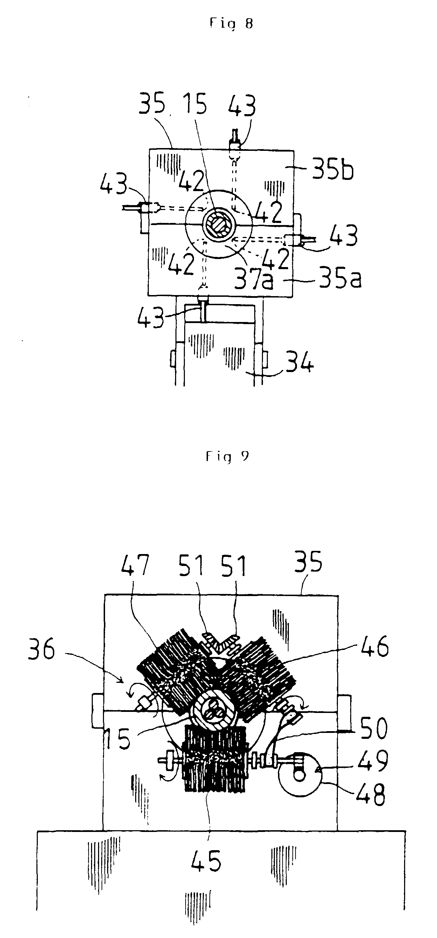

Now, the scavenger body 35 will be more detailedly described hereinafter with reference to Fig. 8.

The scavenger body 35 is vertically divided into two sections or a lower section 35a and an upper section 35b. The lower section 35a is formed with a through-hole 37a, via which the cable 15 is inserted. Then, the upper section 35b is fixedly connected to the lower section 35a. Four such air feed paths 43 are provided at the scavenger body 35.

Now, the rotary brush assembly 36 will be described hereinafter with reference to Fig. 9.

The rotary brush assembly 36 includes three or first to third rotary brushes 45, 46 and 47 arranged in a triangular manner so as to surround the cable 15 when it is inserted through the rotary brush assembly 36. The first rotary brush 45 is connected to a motor 48 through a worm gear 49. The second rotary brush 46 is connected to the first rotary brush 45 by means of a cloth belt 50 and then the third rotary brush 47 is connected to the second rotary brush 46 through a bevel gear 51. Thus, when the first rotary brush 45 is rotated as indicated at an arrow in Fig. 9 (or in a direction toward the sewer pipe B) by means of the motor 48, the second rotary brush 46 and third rotary brush 47 are likewise rotated in the direction toward the sewer B (see arrows), resulting in sludge or the like adhering to the surface of the cable 15 being removed therefrom toward the sewer B.

### Industrial Applicability

As described above, the cable delivery length measuring apparatus of the present invention permits the surface of the cable to be cleaned and dry with a simple structure. Thus, a position of damage to the underground pipe or the like is more accurately identified or specified, to thereby ensure more effective repairs.

In particular, flowing of compressed air in a spiral manner in the scavenger body permits a spiral air stream to be formed over a whole peripheral surface of the cable, to thereby further enhance a cleaning function of the air. In this instance, feeding of compressed air in the middle of the through-hole causes a linear air stream to be formed rearward of the spiral air stream, resulting in two air streams different in direction being provided, to thereby ensure positive removal of stains persistently adhering to the cable from the cable. In addition, arrangement of the three cable-rubbing rotary brushes on the portion of the scavenger defined on the side of the underground pipe in a triangular manner so as to surround the cable permits major stains to be removed from the cable forward of the scavenger body, to thereby prevent clogging of the through-hole of the scavenger body with stains. Also, this loosens highly persistent adhesion of stains to the cable, to thereby promote removal of the stains by the scavenger.

Also, formation of the anti-slip layer on the surface of the detection roller permits the anti-slip layer to substantially prevent slippage between the detection roller and the cable even when oil, water, sludge or the like adheres to the surface of the cable. This results in the greatest cause which is responsible for an error in measurement of a cable delivery length being effectively eliminated, so that the measurement may be accomplished with increased accuracy. This permits a position of damage to the underground conduit or pipe or the like to be accurately identified or specified, to thereby ensure that repairs of the pipe can be effectively attained. In particular, formation of the anti-slip layer into a gear-like configuration positively permits friction between the detection roller and the cable to be increased and effectively prevents a decrease in close contact between the detection roller and the cable due to a variation in thickness or diameter of the cable. Also, it permits oil, water, sludge or the like adhering to the cable due to insertion of the cable into the underground pipe to be suckedly removed and outwardly forcedly discharged through the tooth spaces or grooves of the gear-like anti-slip layer, resulting in the surface of the cable being cleaned and kept clean, so that slippage between the detection roller and the cable may be more effectively prevented. Further, when the cable is passed around the detection roller in a manner to be contacted with the detection roller while keeping a central angle of the anti-slip layer contacted with the cable within a range of 120 degrees or more, the measurement may be accomplished with further increased accuracy.

## Claims

1. A cable delivery length measuring apparatus comprising a detection roller (1) and a press roller (2) wherein the arrangement is such that a cable drawn into an underground pipe is interposed between the detection roller (1) and the press roller (8), resulting in a length of the cable delivered being measured on the basis of the number of revolutions of the detection roller, characterized in that:
a scavenger (22) is arranged on the delivery side of said detection roller that, in use, faces the underground pipe; and that
said scavenger includes a scavenger body (35) provided with a through-hole (37) via which the cable is inserted and an air feed path (39) for feeding said scavenger body (35) with compressed air so as to permit the compressed air to flow through said through-hole (37).

2. A cable delivery length measuring apparatus as claimed in Claim 1, characterized in that said air feed path (39) is so shaped that compressed air flows in a spiral manner in said through-hole.

3. A cable delivery length measuring apparatus as claimed in Claim 2, characterised in that means (42) is provided for feeding compressed air at an intermediate protion of said through-hole (37).

4. A cable delivery length measuring apparatus as defined in any one of Claims 1-3, characterised in that three rotary brushes (45, 46, 47) for rubbing a surface of the cable are arranged on a delivery side of said scavenger body (35) in a triangular manner so as to surround the cable.

5. A cable delivery length measuring apparatus as claimed in Claim 1, 3 or 4, characterised in that said through-hole (37) is formed on a surface thereof with a spiral groove (38); and that the arrangement is such that, in use, said compressed air flows in a spiral manner along said spiral groove (38), to thereby flow via said through-hole (37).

6. An apparatus according to any one of Claims 1-5, characterised in that a surface of said detection roller (1) is provided with an anti-slip layer (5) comprising rubber with a high coefficient of friction.

7. An apparatus according to claim 6 characterised in that said anti-slip layer (5) has a toothed, gear-like configuration.

8. An apparatus according to Claim 6 or 7, characterised in that said detection roller (1) is associated with guide rollers (18) arranged so that a cable passing between said detection roller (1) and said guide rollers (18) is caused to contact said anti-slip layer (5) through an angle of contact of 120° or more.

## Patentansprüche

1. Apparat zum Messen der abgezogenen Länge eines Kabels, umfassend eine Meßrolle (1) und eine Anpreßrolle (8), wobei die Anordnung derart getroffen ist, dass die abgezogene Länge eines in ein unterirdisches Rohr gezogenen Kabels, welches zwischen der Meßrolle (1) und der Anpreßrolle (8) hindurchgeführt ist, anhand der Anzahl von Umdrehungen der Meßrolle (1) ermittelt wird, dadurch gekennzeichnet,
- dass eine Reinigungsvorrichtung (22) an der Abspulseite der Meßrolle (1) angeordnet ist, welche beim Gebrauch dem unterirdischen Rohr zugewandt ist;
- und dass die Reinigungsvorrichtung (22) einen Reinigungskörper (35) aufweist, der einerseits mit einer Durchgangsöffnung (37) versehen ist, in die das Kabel eingeführt wird, sowie andererseits mit einem Pfad (39) zum Einleiten von Luft, die dem Reinigungskörper (35) in Form von komprimierter Luft zugeführt wird und durch die Durchgangsöffnung (37) hindurchströmen kann.

2. Apparat zum Messen der abgezogenen Länge eines Kabels nach Anspruch 1, dadurch gekennzeichnet, dass der Luftleitpfad (39) derart geformt ist, dass komprimierte Luft die Durchgangsöffnung (37) wendelartig durchströmt.

3. Apparat zum Messen der abgezogenen Länge eines Kabels nach Anspruch 2, gekennzeichnet durch ein Mittel (42) zum Einleiten komprimierter Luft in einen mittleren Bereich der Durchgangsöffnung (37).

4. Apparat zum Messen der abgezogenen Länge eines Kabels nach einem der Ansprüche 1 bis 3, dadurch gekennzeichnet, dass zum Putzen der Oberfläche des Kabels an der Abspulseite des Reinigungskörpers (35) drei rotierende Bürsten (45, 46, 47) in Form eines Dreiecks angeordnet sind, derart, dass sie das Kabel umgeben.

5. Apparat zum Messen der abgezogenen Länge eines Kabels nach einem der Ansprüche 1, 3 oder 4, dadurch gekennzeichnet, dass die Durchgangsöffnung (37) an ihrer Oberfläche eine wendelförmige Rille (38) aufweist, und dass die Anordnung derart getroffen ist, dass die komprimierte Luft im Betrieb wendelartig entlang der wendelförmigen Rille (38) fließt und dabei die Durchgangsöffnung (37) durchströmt.

6. Apparat nach einem der Ansprüche 1 bis 5, dadurch gekennzeichnet, dass die Oberfläche der Meßrolle (1) mit einer rutschhemmenden Schicht (5) versehen ist, bestehend aus einem Gummi mit hohem Reibungskoeffizient.

7. Apparat nach Anspruch 6, dadurch gekennzeichnet, dass die rutschhemmende Schicht (5) eine gezahnte, insbesondere zahnradartige Anordnung aufweist.

8. Apparat nach Anspruch 6 oder 7, dadurch gekennzeichnet, dass die Meßrolle (1) mit Führungsrollen (18) kombiniert ist, derart, dass ein zwischen der Meßrolle (1) und den Führungsrollen (18) hindurchgeführtes Kabel die rutschhemmende Schicht (5) auf einem Winkel von 120° oder mehr berührt.

## Revendications

1. Appareil pour mesurer la longueur déroulée d'un câble comprenant un galet de détection (1) et un galet de pression (2), dans lequel l'agencement est tel qu'un câble tiré à l'intérieur d'une canalisation souterraine est interposé entre le galet de détection (1) et le galet de pression (8), une longueur du câble déroulé étant ainsi mesurée sur la base du nombre de révolutions du galet de détection, caractérisé en ce que :
un nettoyeur (22) est disposé sur le côté déroulement dudit galet de détection qui, en utilisation, fait face à la canalisation souterraine, et en ce que
ledit nettoyeur comprend un corps de nettoyeur (35) pourvu d'un trou de passage (37) à travers lequel le câble est introduit et d'une voie d'alimentation en air (39) pour alimenter ledit corps de nettoyeur (35) en air comprimé de manière à permettre à l'air comprimé de s'écouler à travers ledit trou de passage (37).

2. Appareil pour mesurer la longueur déroulée d'un câble selon la revendication 1, caractérisé en ce que ladite voie d'alimentation en air (39) est formée de telle manière que l'air comprimé s'écoule en spirale dans ledit trou de passage.

3. Appareil pour mesurer la longueur déroulée d'un câble selon la revendication 2, caractérisé en ce qu'un moyen (42) est fourni pour amener de l'air comprimé dans une partie intermédiaire dudit trou de passage (37).

4. Appareil pour mesurer la longueur déroulée d'un câble selon l'une des revendications 1 à 3, caractérisé en ce que trois brosses rotatives (45, 46, 47) pour frotter une surface du câble sont disposées sur un côté déroulement dudit corps de nettoyeur (35) d'une manière triangulaire de façon à entourer le câble.

5. Appareil pour mesurer la longueur déroulée d'un câble selon la revendication 1, 3 ou 4, caractérisé en ce que ledit trou de passage (37) est formé avec une rainure en spirale (38) sur une surface de celui-ci, et que l'agencement est tel qu'en utilisation ledit air comprimé s'écoule en spirale le long de ladite rainure en spirale (38), afin de s'écouler ainsi à travers le trou de passage (37).

6. Appareil selon l'une des revendications 1 à 5, caractérisé en ce qu'une surface dudit galet de détection (1) est pourvue d'une couche antidérapante (5) comprenant du caoutchouc ayant un coefficient de frottement élevé.

7. Appareil selon la revendication 6, caractérisé en ce que ladite couche antidérapante (5) a une configuration dentelé en engrenage.

8. Appareil selon la revendication 6 ou 7, caractérisé en ce que ledit galet de détection (1) est associé à des galets de guidage (18) disposés de telle manière qu'un câble passant entre ledit galet de détection (1) et lesdits galets de guidage (18) est mis en contact avec ladite couche antidérapante (5) selon un angle de contact de 120° ou plus.
